(19)

Europäisches Patentamt

European Patent Office

Office européen des brevets

(11) **EP 4 632 824 A1**

(12) **EUROPEAN PATENT APPLICATION**

(43) Date of publication:
**15.10.2025 Bulletin 2025/42**

(21) Application number: 24192109.7

(22) Date of filing: **31.07.2024**

(51) International Patent Classification (IPC):
**H01M 4/04** *(2006.01)* **H01M 4/139** *(2010.01)*

(52) Cooperative Patent Classification (CPC):
**H01M 4/0435**; H01M 4/0404; H01M 4/139

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.04.2024 KR 20240048147**

(71) Applicant: SAMSUNG SDI CO., LTD.
**Giheung-gu**
**Yongin-si, Gyeonggi-do**
**17084 (KR)**

(72) Inventors:
• **Kim, Jong Su**
  **16678 Suwon-si, Gyeonggi-do (KR)**
• **Yoo, Dae Yeol**
  **16678 Suwon-si, Gyeonggi-do (KR)**
• **Choi, Hyun Kyu**
  **16678 Suwon-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(54) **APPRATUS AND METHOD FOR MANUFACTURING BATTERY**

(57)    An apparatus for manufacturing a battery includes: a measurement module (100) configured to measure physical properties of an electrode plate (E) in a pressing process in which the electrode plate (E) coated with a coating material (C) is pressed by a pressing roll (PR), and including a first measurement unit (110) and a second measurement unit (120); and a processor (200) configured to receive first physical properties of the electrode plate (E) before pressing and second physical properties of the electrode plate (E) after pressing from the first and second measurement units (110, 120), respectively, and to determine a change in physical properties of the coating material (C) caused by stretching of the electrode plate (E) in the pressing process, wherein the change in physical properties of the coating material (C) caused by the stretching of the electrode plate (E) functions as a factor for defining a capacity of a battery to be manufactured.

FIG. 3

EP 4 632 824 A1

**Description**

**BACKGROUND**

**1. Field**

The present disclosure relates to an apparatus and method for manufacturing a battery through a pressing process (or a calendering process) for an electrode.

**2. Description of the Related Art**

Unlike a primary battery that cannot be recharged, a secondary battery is a battery that can be recharged and discharged. A low-capacity secondary battery may be used for portable small-sized electronic devices, such as smartphones, feature phones, notebook computers, digital cameras, and camcorders, and a high-capacity secondary battery is widely used as a power source for driving a motor and a power storage battery in hybrid vehicles or electric vehicles. The secondary battery includes an electrode assembly including a positive electrode and a negative electrode, a case accommodating the electrode assembly, an electrode terminal connected to the electrode assembly, and the like.
The above information disclosed in this Background section is merely disclosed for helping to understand the background of the present disclosure, and therefore, it may contain information that does not constitute related (or prior) art.

**SUMMARY**

The invention is defined by the appended claims. The description that follows is subjected to this limitation. Any disclosure lying outside the scope of said claims is only intended for illustrative as well as comparative purposes.
An electrode process for manufacturing an electrode among components of a secondary battery includes a coating process of forming a positive electrode and a negative electrode by coating a surface of a metal electrode plate, which is a current collector, with an active material and a predetermined insulating material, a pressing process (or a calendering process or a roll pressing process) of pressing the coated electrode, and a slitting process of cutting the pressed electrode according to a dimension.
In the pressing process of the above electrode manufacturing process, the electrode plate coated with the active material is pressed by a pressing roll to achieve a target thickness, and due to a pressure applied to the electrode plate by the pressing roll, the electrode plate may be stretched (elongated), causing a phenomenon in which a coating amount of the active material per unit area on the electrode plate is reduced. The coating amount of the active material per unit area on the electrode plate is referred to as a loading level, and a reduction amount of the coating amount of the active material per unit area during the pressing process is referred to as a loading level reduction amount. The loading level reduction amount affects the capacity of a battery cell after the battery cell is manufactured, and thus, to manufacture the battery to meet the required manufacturing specifications (specs), it is desired to accurately determine the loading level reduction amount during the manufacturing process.
To determine the loading level reduction amount, a punching machine is being used to extract samples from specific sections of the electrode plates and punch out a defined area. For example, a method in which a first punched electrode plate is obtained by punching the electrode plate before pressing, and a second punched electrode plate is obtained by punching the electrode plate after pressing, and then, a weight of the first punched electrode plate is compared with a weight of the second punched electrode plate loading level reduction amount is being used to determine the loading level reduction amount.
However, the method of using the punching machine to determine the loading level reduction amount has a problem in that the use of punched electrode plates sampled from specific sections, rather than the entire electrode plates reduces the accuracy of calculating the loading level reduction amount for the entire electrode plates. In addition, relying on manual measurements by workers to determine the loading level reduction amount using the punching machine may lead to unreliable results due to variations in the loading level reduction amount measured by the workers.
Aspects of the present disclosure are directed to providing an apparatus and method for manufacturing a battery, in which batteries are manufactured using a method of calculating a loading level reduction amount more accurately by overcoming the problem of reduced accuracy and reliability in calculating the loading level reduction amount caused by workers manually determining the loading level reduction amount using a punching machine.
However, objects that the present disclosure intends to achieve are not limited to the above-described objects and other objects that are not described may be clearly understood by those skilled in the art from the following description.
According to an embodiment of the present invention, there is provided an apparatus for manufacturing a battery, the apparatus including: a measurement module configured to measure physical properties of an electrode plate in a pressing process in which the electrode plate coated with a coating material is pressed by a pressing roll, and including a first measurement unit and a second measurement unit respectively provided at an inlet side where the electrode plate is fed into the pressing roll and an outlet side where the electrode plate is withdrawn from the pressing roll; and a processor configured to receive first physical properties of the electrode plate before pressing and second physical properties of the electrode plate after pressing from the first and second measurement units, respectively, and to determine a change in physical properties of the coating material caused by stretching of the electrode plate in the pressing process, wherein, the change in physical properties of the coating material caused by the stretching of the electrode plate functions as a factor for defining a capacity of a battery to be manufactured.

The determining a change in physical properties of the coating material caused by stretching of the electrode plate in the pressing process may be based on the first and second physical properties of the electrode plate.

The physical properties of the coating material and the first and second physical properties of the electrode plate may be the same properties. However, they may differ from each other. For example, the first and second physical properties of the electrode plate may be a first type of physical properties and the physical properties of the coating material may be a second type of physical properties, wherein the second type may be obtained based on the first type, for example by conversion.

In some embodiments, the processor is configured to calculate an elongation of the electrode plate based on the first and second physical properties of the electrode plate, and to determine the change in physical properties of the coating material from the calculated elongation of the electrode plate. In other words, there is a functional relationship between the elongation of the electrode plate, which can be determined from the first and second physical properties, and the change in physical properties of the coating material.

In some embodiments, the change in physical properties of the coating material is an amount of change in coating amount per unit area of the coating material caused by the stretching of the electrode plate in the pressing process.

In some embodiments, the processor is configured to determine the amount of change in coating amount per unit area of the coating material caused by the stretching of the electrode plate in the pressing process based on the elongation of the electrode plate and the coating amount per unit area of the coating material before pressing.

In some embodiments, the physical properties of the electrode plate include a width and/or a length of the electrode plate, the first measurement unit includes a first width sensor and/or a first length sensor respectively configured to measure the width and/or the length of the electrode plate before pressing, and the second measurement unit includes a second width sensor and/or a second length sensor respectively configured to measure the width and/or the length of the electrode plate after pressing. In other words, the first measurement unit and the second measurement unit may each comprise the same type of sensor. Accordingly, both measurement units may each comprise, for example, only a width sensor or only a length sensor or both types of sensors. Just one of the physical properties of the electrode plate makes it possible to determine the change in physical properties of the coating material caused by the stretching of the electrode plate, while at the same time keeping the need for components and effort manageable. If both physical properties are taken into account, however, an improved picture is obtained.

In some embodiments, the first physical properties of the electrode plate include a first width and/or a first length of the electrode plate measured through the first width sensor and/or the first length sensor, respectively, and the second physical properties of the electrode plate include a second width and/or a second length of the electrode plate measured through the second width sensor and/or the second length sensor, respectively. In other words, the first physical properties and the second physical properties of the electrode plate may each comprise the same type of physical properties. Accordingly, both measurement units may each be measured only through a respective width sensor, a respective length sensor, or both types of sensors.

In some embodiments, the processor is configured to: calculate an elongation of the electrode plate in a width direction based on the first and second widths; and/or calculate an elongation of the electrode plate in a length direction based on the first and second lengths; and calculate a total elongation of the electrode plate due to pressing of the pressing roll based on the calculated elongations in the width and/or length directions.

In some embodiments, the processor is configured to calculate the elongation in the width direction using a ratio between the first and second widths, and/or to calculate the elongation in the length direction using a ratio between the first and second lengths.

In some embodiments, the processor is configured to converge a value of the change in physical properties of the coating material to within an allowable range, which is predefined according to manufacturing specifications of the battery, by compressing a tension of the electrode plate in response to the value of the determined change in physical properties of the coating material deviating from the allowable range. In other words, the pressure exerted on the electrode plate by the pressing roll is adjusted depending on the determined change in physical properties of the coating material caused by the stretching of the electrode plate. The adjustment may be made in such a way that a deviation between the change in physical properties of the coating material and the allowable range is determined and the tension is changed depending on the determined deviation.

According to another embodiment of the present disclosure, there is provided a method of manufacturing a battery, the method including: obtaining, by a processor, first physical properties of an electrode plate before pressing through a first measurement unit, the first measurement unit being provided at an inlet side where the electrode plate coated with a coating material is fed into a pressing roll and configured to measure the first physical properties of the electrode plate; obtaining, by the processor, second physical properties of the electrode plate after pressing through a second measurement unit, the second measurement unit being provided at an outlet side where the electrode plate coated with the coating material is withdrawn from the pressing roll and configured to measure the second physical properties of the electrode plate; and determining, by the processor, a change in physical properties of the coating material caused by stretching of the electrode plate in a pressing process based on the first and second physical properties, wherein the change in physical properties of the coating material caused by the stretching of the electrode plate functions as a factor for defining a capacity of a battery to be manufactured.

In some embodiments, in the determining of the change in physical properties of the coating material, the processor is configured to calculate an elongation of the electrode plate based on the first and second physical properties of the electrode plate, and to determine the change in physical properties of the coating material from the calculated elongation of the electrode plate.

In some embodiments, the change in physical properties of the coating material is an amount of change in coating amount per unit area of the coating material caused by the stretching of the electrode plate in the pressing process.

In some embodiments, in the determining of the change in physical properties of the coating material, the processor is configured to determine the amount of change in coating amount per unit area of the coating material caused by the stretching of the electrode plate in the pressing process based on the elongation of the electrode plate and the coating amount per unit area of the coating material before pressing.

In some embodiments, the physical properties of the electrode plate include a width and/or a length of the electrode plate, the first measurement unit includes a first width sensor and/or a first length sensor respectively configured to measure the width and/or the length of the electrode plate before pressing, and the second measurement unit includes a second width sensor and/or a second length sensor respectively configured to measure the width and/or the length of the electrode plate after pressing.

In some embodiments, the first physical properties of the electrode plate include a first width and/or a first length of the electrode plate measured through the first width sensor and/or the first length sensor, respectively, and the second physical properties of the electrode plate include a second width and/or a second length of the electrode plate measured through the second width sensor and/or the second length sensor, respectively.

In some embodiments, in the determining of the change in physical properties of the coating material, the processor is configured to calculate an elongation of the electrode plate in a width direction based on the first and second widths, and/or to calculate an elongation of the electrode plate in a length direction based on the first and second lengths, and to calculate a total elongation of the electrode plate due to pressing of the pressing roll based on the calculated elongations in the width and/or length directions.

In some embodiments, in the determining of the change in physical properties of the coating material, the processor is configured to calculate the elongation in the width direction using a ratio between the first and second widths, and/or to calculate the elongation in the length direction using a ratio between the first and second lengths.

In some embodiments, the method further includes: comparing, by the processor, a value of the determined change in physical properties of the coating material with an allowable range; and converging, by the processor, the value of the change in physical properties of the coating material to within the allowable range by compressing a tension of the electrode plate, in response to the value of the determined change in physical properties of the coating material deviating from the allowable range.

However, effects that can be achieved through the present invention are not limited to the above-described effects and other effects that are not described may be clearly understood by those skilled in the art from the detailed descriptions.

## BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:

FIG. 1 illustrates an example of a pressing process in a battery electrode manufacturing process according to some embodiments of the present disclosure;

FIG. 2 is a block diagram of an apparatus for manufacturing a battery according to some embodiments of the present disclosure;

FIG. 3 illustrates an example of an in-line facility structure according to some embodiments of the present disclosure;

FIG. 4 illustrates the definition of an electrode plate orientation according to some embodiments of the present disclosure; and

FIGS. 5 and 6 are flowcharts illustrating a method of manufacturing a battery according to some embodiments of the present disclosure.

**DETAILED DESCRIPTION**

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element\(s\) or feature\(s\) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

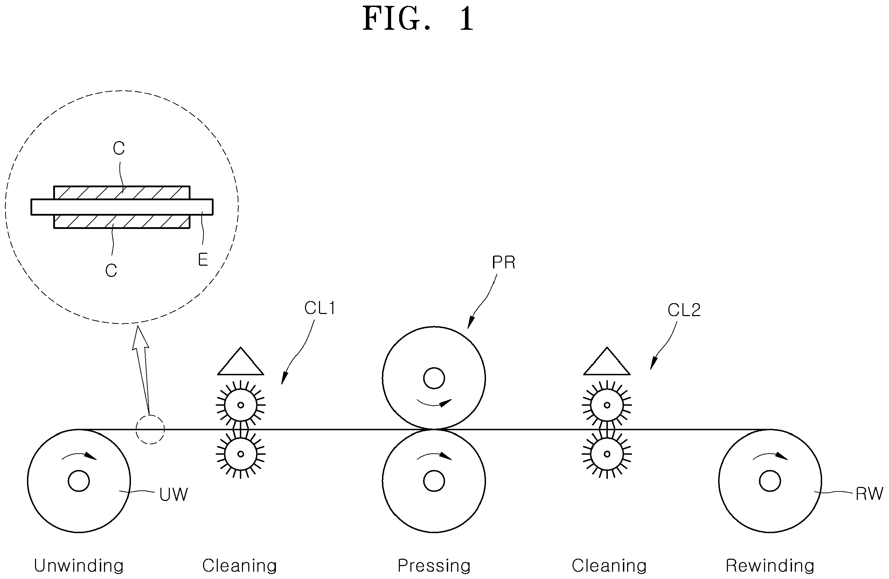

FIG. 1 illustrates an example of a pressing process in a battery electrode manufacturing process according to some embodiments of the present disclosure. The pressing process is generally described as follows with first reference to FIG. 1.

Both electrodes of a metal electrode plate E (e.g., an aluminum foil or a copper foil), which is a current collector, are coated with a coating material C (e.g., a mixture of active material, a conductive material, and a binder) and dried through a mixing process and a coating process performed before the pressing process. In the pressing process, a thickness of the electrode plate E coated with the coating material C is reduced to a target thickness set or predefined according to the manufacturing specifications of the battery, and accordingly, a thickness of the mixture becomes uniform, and a binding force between the coating material C and the electrode plate E is improved, which ultimately increases energy density (e.g., energy density per unit volume).

The pressing process includes a roll-to-roll process in which the electrode plate E is unwound from an unwinder UW and is wound around a rewinder RW. The electrode plate E coated with the coating material C is unwound from the unwinder UW (i.e., through unwinding), and foreign substances on the electrode plate E are removed by a brush member or air flow member CL1 (i.e., through cleaning). Thereafter, pressing is performed on the electrode plate E coated with the coating material C by a pressing roll PR, foreign substances on the electrode plate E are removed by a brush member or the air flow member CL2 (i.e., through cleaning), and the electrode plate E is wound around the rewinder RW (i.e., through rewinding).

As described above, the coating amount of the coating material C per unit area on the electrode plate E is reduced as the electrode plate E is stretched (e.g., elongated) due to a pressure applied to the electrode plate E by the pressing roll PR in the pressing process. As used herein, the phrase "the amount of change (e.g., reduction) in coating amount of the coating material per unit area on the electrode plate caused by stretching of the electrode plate in the pressing process" is defined as a "loading level change amount (e.g., reduction amount)". The present embodiments focus on an in-line process for accurately determining such loading level change amount, which will be described in more detail below.

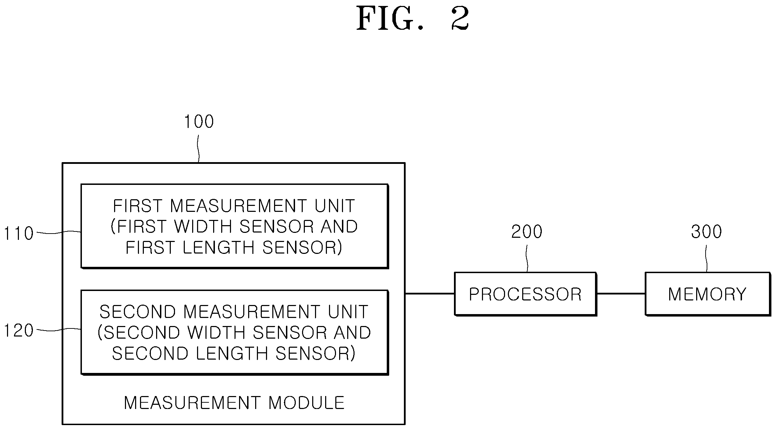

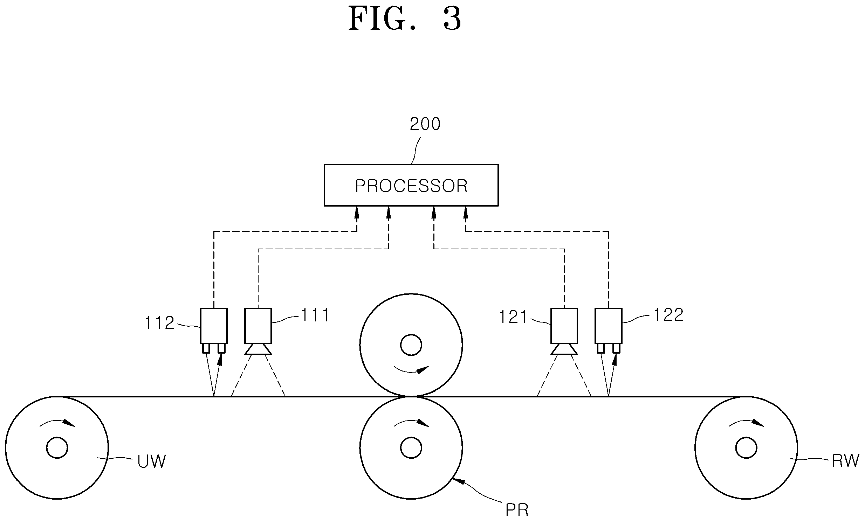

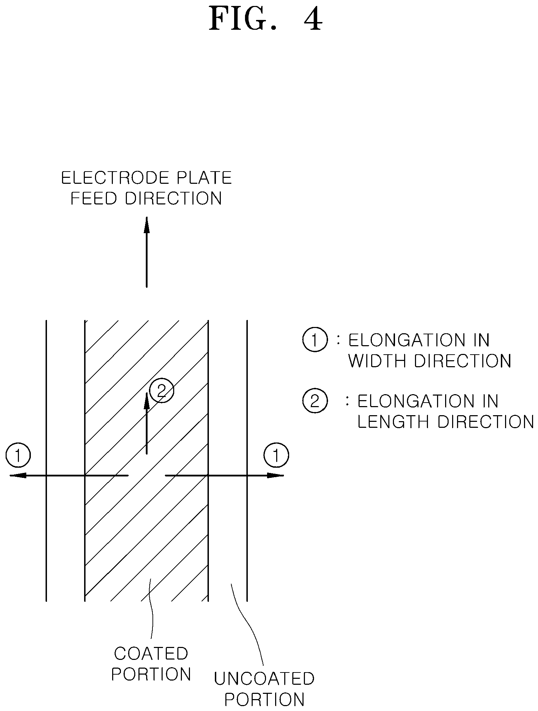

FIG. 2 is a block diagram of an apparatus for manufacturing a battery according to some embodiments of the present disclosure; FIG. 3 illustrates an example of an in-line facility structure according to some embodiments of the present disclosure; and FIG. 4 illustrates the definition of an electrode plate orientation according to some embodiments of the present disclosure.

Referring to FIGS. 2 to 4, the apparatus for manufacturing a battery according to some embodiments may include a measurement module 100, a processor 200, and a memory 300.

The measurement module 100 may measure physical properties of an electrode plate E in a pressing process in which the electrode plate E coated with a coating material (not shown in Fig. 3) is pressed by a pressing roll PR. The physical properties of the electrode plate E measured by the measurement module 100 may include first physical properties of the electrode plate E before pressing and second physical properties of the electrode plate E after pressing. To this end, the measurement module 100 may include a first measurement unit 110 provided at an inlet side where the electrode plate E is fed into the pressing roll PR, and a second measurement unit 120 provided at an outlet side where the electrode plate E is withdrawn from the pressing roll PR. As shown in FIG. 3, each of the first and second measurement units 110 and 120 may be provided in a structure fixedly installed above the fed electrode plate E at a position spaced apart from the pressing roll PR by a set distance in a direction in which the electrode plate is fed.

In some embodiments, the physical properties of the electrode plate E measured by the measurement module 100 may refer to a width and a length of the electrode plate. Accordingly, the first physical properties of the electrode plate E may include a width and a length of the electrode plate E before pressing, and the second physical properties of the electrode plate E may include a width and a length of the electrode plate E after pressing. To clearly distinguish the terms, the width and the length of the electrode plate before pressing will be referred to as a first width and a first length, respectively, and the width and the length of the electrode plate E after pressing will be referred to as a second width and a second length, respectively.

The first measurement unit 110 described above may include a first width sensor 111 configured to measure the first width and a first length sensor 112 configured to measure the first length. The first width sensor 111 may be implemented as a conventional vision sensor that obtains an image of the electrode plate E within a field of view (FOV) range and measures a width of the electrode plate E through an image processing algorithm (e.g., predetermined image processing algorithm). In addition, the first length sensor 112 may be implemented as a conventional laser displacement sensor that measures a movement distance of the electrode plate E (i.e., a length of the electrode plate E) by a method of irradiating a laser through light transmitting elements (e.g., a transmitting lens and a semiconductor laser irradiator) and receiving the laser reflected by the electrode plate E through light receiving elements (e.g., a light receiving element and a linear image sensor) to detect the electrode plate E.

The second measurement unit 120 may include a second width sensor 121 configured to measure the second width and a second length sensor 122 configured to measure the second length, and the second width sensor 121 and the second length sensor 122 may also be implemented as a vision sensor and a laser displacement sensor, respectively.

Next, the processor 200, which is an entity for determining a change in physical properties of the coating material caused by the stretching of the electrode plate E, may be implemented as a central processing unit (CPU) or system on chip (SoC), may drive an operating system or application to control a plurality of hardware or software components connected to the processor 200, and may perform various data processes and calculations. The processor 200 may also be implemented as a programmable logic controller (PLC) that is integrated into the in-line process, to control the pressing process in response to the change in physical properties of the coating material. The processor 200 may be configured to execute at least one instruction stored in the memory 300 to be described later, and store data resulting from the execution in the memory 300.

The processor 200 may receive the first physical properties of the electrode plate E before pressing and the second physical properties of the electrode plate E after pressing from the first and second measurement units 110 and 120, respectively, to determine the change in physical properties of the coating material caused by the stretching of the electrode plate E in the pressing process. The change in physical properties of the coating material may mean the amount of change in coating amount of the coating material per unit area (i.e., the loading level change amount) caused by the stretching of the electrode plate E, which functions as a factor defining the capacity of the battery to be manufactured.

In some embodiments, the processor 200 may calculate an elongation of the electrode plate based on the first and second physical properties of the electrode plate E , and determine the loading level change amount from the calculated elongation of the electrode plate E. For example, the processor 200 may determine the loading level change amount caused by the stretching of the electrode plate E based on the elongation of the electrode plate E and the coating amount of the coating material per unit area before pressing (a loading level before pressing in Table 1 to be described below). A method of calculating the loading level change amount will be described later.

Next, at least one instruction executed by the processor 200 to be described later may be stored in the memory 300. The memory 300 may be implemented as a volatile storage medium and/or a non-volatile storage medium, for example, as a read only memory (ROM) and/or a random-access memory (RAM).

In addition, pieces of data on the manufacturing specifications of the battery may be stored in the memory 300, and the manufacturing specifications of the battery may define design values for the pressing process. Table 1 below shows an example of the design values for the pressing process according to the manufacturing specifications of the battery.

Table 1

| Production order | Design values for Dressing process | | | |
|---|---|---|---|---|
| | Mixture density (g/cc) | L/L before pressing (mg/cm$^2$) | UL after pressing (mg/cm$^2$) | UL change amount (reduction amount) (mg/cm$^2$) |
| First | 3.739 | 54.27 | 53.47 | 0.80 |
| Second | 3.741 | 54.67 | 53.87 | 0.80 |
| Third | 3.741 | 53.92 | 53.12 | 0.80 |
| Fourth | 3.743 | 54.32 | 53.52 | 0.80 |
| Fifth | 3.760 | 55.98 | 54.98 | 1.00 |

(continued)

| Production order | Design values for Dressing process | | | |
| --- | --- | --- | --- | --- |
| | Mixture density (g/cc) | L/L before pressing (mg/cm$^2$) | UL after pressing (mg/cm$^2$) | UL change amount (reduction amount) (mg/cm$^2$) |
| Sixth | 3.760 | 56.41 | 55.41 | 1.00 |

In Table 1, the symbol "UL" indicates the loading level.

The design values for the pressing process in Table 1 may be used in a process of calculating the loading level change amount and determining whether to perform feedback control on a tension of the electrode plate by determining the suitability of the loading level change amount.

Based on the above, hereinafter, a detailed process of calculating the loading level change amount by the processor 200 will be described.

When the roll-to-roll process of the electrode plate is completed and the first physical properties (i.e., the first width and the first length of the electrode plate before pressing) and the second physical properties (i.e., the second width and the second length of the electrode plate after pressing) for the roll-to-roll process are determined, the processor 200 may calculate elongations of the electrode plate in width and length directions. As shown in FIG. 4, because the pressing of the pressing roll causes the stretching of the electrode plate in the width direction (① in FIG. 4) and the stretching of the electrode plate in the length direction (② in FIG. 4), the processor 200 may separately calculate the elongations of the electrode plate in the length direction and the width direction.

The processor 200 may calculate the elongation of the electrode plate in the width direction based on the first and second widths. The elongation in the width direction means the extent to which the electrode plate is stretched in the width direction during the pressing process of the electrode plate. In this case, the processor 200 may calculate the elongation in the width direction using a ratio between the first and second widths (i.e., a ratio between the width of the electrode plate before pressing and the width of the electrode plate after pressing), and for example, a value of "(second width/first width)-1" may be calculated as the elongation in the width direction.

In addition, the processor 200 may calculate the elongation of the electrode plate in the length direction based on the first and second lengths. The elongation in the length direction means the extent to which the electrode plate is stretched in the length direction during the pressing process of the electrode plate. In this case, the processor 200 may calculate the elongation in the length direction using a ratio between the first and second lengths (i.e., a ratio between the length of the electrode plate before pressing and the length of the electrode plate after pressing), and for example, a value of (second length/first length)-1 (i.e., one subtracted from the divisional of the second length by the first length) may be calculated as the elongation in the length direction

Thereafter, the processor 200 may calculate a total elongation of the electrode plate in the pressing process based on the calculated elongations in the width and length directions, and in this case, the processor 200 may calculate a sum value of the elongations in the width and length directions as the total elongation of the electrode plate. Table 2 below shows experimental data of the elongation in the width direction, the elongation in the length direction, and the total elongation calculated for each production order shown in Table 1.

Table 2

| Measured values of in-line elongation | | |
| --- | --- | --- |
| Elongation in width direction (%) | Elongation in length direction (%) | Total elongation (%) |
| 0.31 | 0.07 | 0.38 |
| 0.31 | 0.14 | 0.46 |
| 0.32 | 0.10 | 0.42 |
| 0.36 | 0.17 | 0.53 |
| 0.36 | 0.25 | 0.61 |
| 0.36 | 0.27 | 0.63 |

When the total elongation of the electrode plate is calculated, the processor 200 may determine the amount of change in coating amount per unit area of the coating material caused by the stretching of the electrode plate during the pressing process, i.e., the loading level change amount, by applying the coating amount per unit area of the coating material before pressing to the calculated total elongation. The "loading level before pressing" constituting the design values for the pressing process shown in Table 1 may be applied as the "coating amount per unit area of the coating material" described above. Accordingly, the loading level change amount may be expressed as Equation 1 below.

Equation 1

$$L/L_{reduce\_actual} = L/L_{coat} \cdot (1 + Elong_{width} + Elong_{length})$$
$$= L/L_{coat} \cdot (1 + Elong_{total})$$

In Equation 1, $L/L_{reduce\_actual}$ represents an actually measured loading level change amount (that is, the loading level reduction amount), $L/L_{coat}$ represents the loading level before pressing, $Elong_{width}$ represents the elongation in the width direction, $Elong_{length}$ represents the elongation in the length direction, and $Elong_{total}$ represents the total elongation.
Table 3 below shows experimental data in which design values for the pressing process, the elongation, and the loading level change amount are summarized for each production order.

Table 4

| Production order | Design values for pressing process | | | | Measured values of in-line elongation | | | |
|---|---|---|---|---|---|---|---|---|
| | Mixture density (g/cc) | L/L before pressing (mg/cm$^2$) | L/L after pressing (mg/cm$^2$) | L/L change amount (reduction amount) (mg/cm$^2$) | Elongation in width direction (%) | Elongation in length direction (%) | Total elongation (%) | L/L change amount (reduction amount) (mg/cm$^2$) |
| First | 3.739 | 54.27 | 53.47 | 0.80 | 0.31 | 0.07 | 0.38 | 0.75 |
| Second | 3.741 | 54.67 | 53.87 | 0.80 | 0.31 | 0.14 | 0.46 | 0.79 |
| Third | 3.741 | 53.92 | 53.12 | 0.80 | 0.32 | 0.10 | 0.42 | 0.77 |
| Fourth | 3.743 | 54.32 | 53.52 | 0.80 | 0.36 | 0.17 | 0.53 | 0.83 |
| Fifth | 3.760 | 55.98 | 54.98 | 1.00 | 0.36 | 0.25 | 0.61 | 0.91 |
| Sixth | 3.760 | 56.41 | 55.41 | 1.00 | 0.36 | 0.27 | 0.63 | 0.92 |

When a value of the change in physical properties of the coating material determined through the above-described process deviates from an allowable range set or predefined according to the manufacturing specifications of the battery, the processor 200 may control the tension of the electrode plate to converge the values of the change in physical properties of the coating material to within the allowable range. The above-described allowable range may correspond to the loading level change amounts of the design values for the pressing process of Tsables 1 and 3. That is, the processor 200 may be configured to control the tension of the electrode plate fed in the pressing process in order to allow the actually measured loading level change amount to have a value less than or equal to the designed loading level change amount when the currently measured loading level change amount exceeds the loading level change amount designed for the pressing process, and the logic for compressing the tension of the electrode plate may be programmed or predefined in the memory 300 based on designer's experimental results.

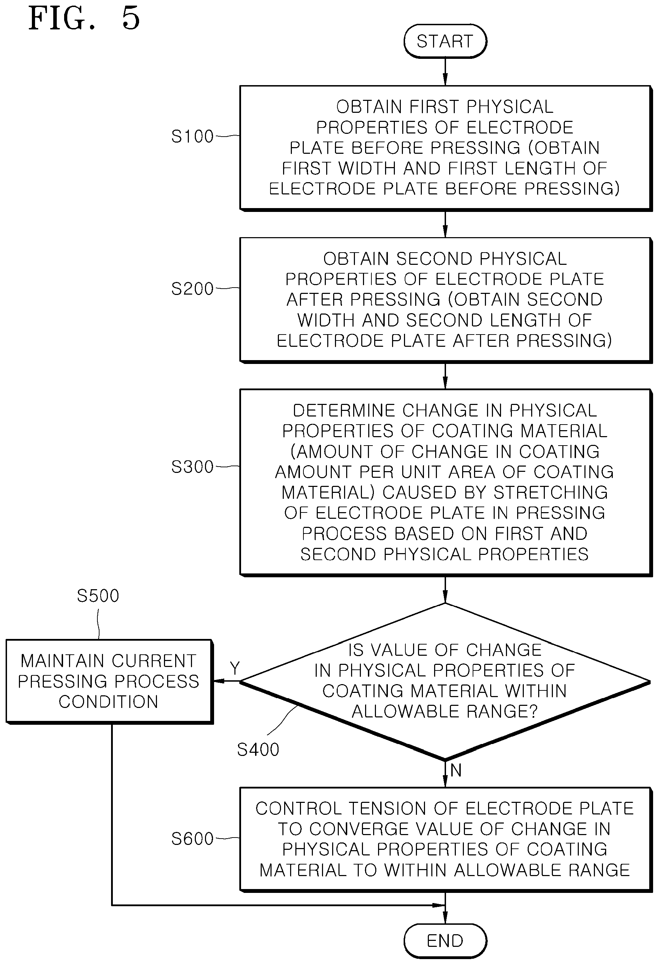

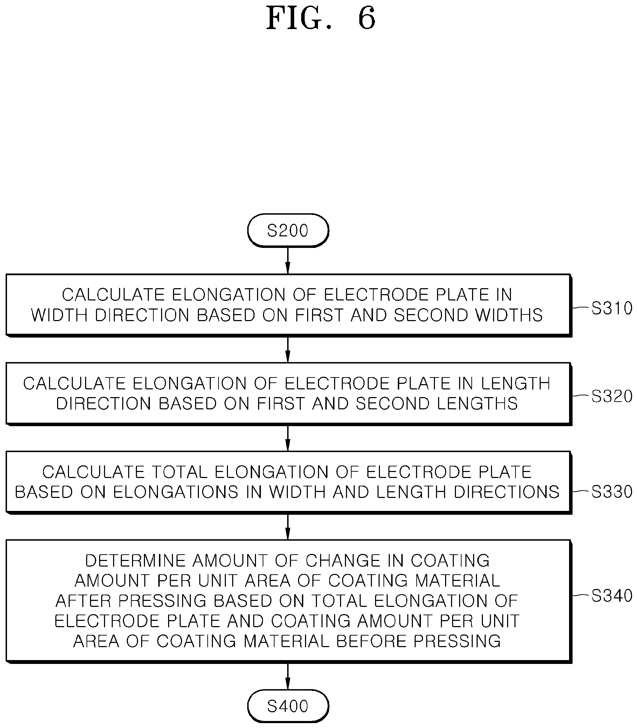

FIGS. 5 and 6 are flowcharts illustrating a method of manufacturing a battery according to some embodiments of the present disclosure. The method of manufacturing a battery of the present disclosure will be described with reference to FIGS. 5 and 6, and detailed descriptions of parts overlapping with those described above will be omitted, and the time-series configuration may be mainly described.
First, the processor 200 obtains first physical properties of an electrode plate before pressing through the first measurement unit 110 (S100). The first measurement unit 110 is provided at an inlet side where the electrode plate coated with a coating material is fed into the pressing roll and configured to measure the first physical properties of the electrode plate. The first physical properties measured in operation S100 include a first width and a first length of the electrode plate before pressing.
Subsequently, second physical properties of the electrode plate after pressing are obtained through the second measurement unit 120 (S200). The second measurement unit 120 is provided at an outlet side where the electrode plate coated with the coating material is withdrawn from the pressing roll and is configured to measure the second physical properties of the electrode plate. The second physical properties measured in operation S200 include a second width and a second length of the electrode plate after pressing.

Subsequently, the processor 200 determines a change in physical properties of the coating material caused by stretching of the electrode plate in a pressing process based on the first and second physical properties respectively obtained in operations S100 and S200 (S300). The change in physical properties of the coating material determined in operation S300 means the amount of change in coating amount (i.e., a loading level change amount) per unit area of the coating material caused by the stretching of the electrode plate, which functions as a factor defining the capacity of the battery to be manufactured.

Describing operation S300 in detail with reference to FIG. 6, the processor 200 calculates an elongation of the electrode plate in the width direction based on the first and second widths (S310). In this case, the processor 200 may calculate the elongation in the width direction using a ratio between the first and second widths, and for example, a value of (second width/first width)-1 may be calculated as the elongation in the width direction.

In addition, the processor 200 may calculate an elongation of the electrode plate in the length direction based on the first and second lengths (S320). In this case, the processor 200 may calculate the elongation in the length direction using a ratio between the first and second lengths, and for example, a value of (second length/first length)-1 may be calculated as the elongation in the length direction.

Operations S310 and S320 are independent operations that may be performed in parallel by the processor 200, and the order of performing operations is not limited to the order described above.

When the elongation in the width direction and the elongation in the length direction are calculated through operations S310 and S320, the processor 200 calculates a total elongation of the electrode plate due to pressing of the pressing roll based on the calculated elongations in the width and length directions (S330). In this case, the processor 200 may calculate a sum value of the elongation in the width direction and the elongation in the length direction as the total elongation of the electrode plate.

Subsequently, the processor 200 determines the amount of change in coating amount per unit area of the coating material caused by the stretching of the electrode plate during the pressing process, that is, a loading level change amount, by applying the coating amount per unit area of the coating material before pressing to the total elongation calculated in operation S330 (S340). In operation S340, the loading level change amount may be calculated according to Equation 1 described above.

After operation S300, the processor 200 compares the value of the change in physical properties of the coating material determined in operation S300 with an allowable range predefined according to the manufacturing specifications of the battery (S400). That is, the processor 200 determines whether the currently measured loading level change amount exceeds the loading level change amount designed for the pressing process.

When it is determined in operation S400 that the value of the change in physical properties of the coating material is within the allowable range, that is, when it is determined that the measured loading level change amount is less than or equal to the designed loading level change amount for the pressing process, the processor 200 maintains the current pressing process condition (S500).

When it is determined in operation S400 that the value of the change in physical properties of the coating material deviates from the allowable range, that is, when it is determined that the measured loading level change amount exceeds the designed loading level change amount for the pressing process, the processor 200 controls a tension of the electrode plate so that the value of the change in physical properties of the coating material converges to within the allowable range (i.e., the processor 200 controls the tension of the electrode plate such that the measured loading level change amount is less than or equal to the designed loading level change amount for the pressing process) (S600).

As described above, according to some embodiments, by adopting a method of introducing the first measurement unit (e.g., a vision sensor and a length sensor) to measure the first physical properties (e.g., the width and the length of the electrode plate before pressing) of the electrode plate before pressing and the second measurement unit to measure the second physical properties (e.g., the width and the length of the electrode plate after pressing) of the electrode plate after pressing as in-line equipment in the pressing process, and then determining a change in physical properties of the coating material (i.e., reduction amount of the loading level) caused by the stretching of the electrode plate in the electrode pressing process based on the first physical properties (e.g., the width and the length of the electrode plate before pressing) of the electrode plate before pressing and the second physical properties (e.g., the width and the length of the electrode plate after pressing) of the electrode plate after pressing, which are measured by the first and second measurement units, the loading level reduction amount that occurs in the pressing process can be determined more accurately and reliably.

The terms "module" and "unit" as used herein may include a unit consisting of hardware, software, or firmware, and may, for example, be used interchangeably with the term "logic," "logical block," "component," "circuit," or the like. The "module" or "unit" may be an integrated component, or a minimum unit for performing one or more functions or a part thereof. For example, according to some embodiments, a "module" and a "unit" may be implemented in the form of an application-specific integrated circuit (ASIC). Further, the implementations described herein may be implemented in, for example, a method or a process, an apparatus, a software program, a data stream, or a signal. Even when only discussed in the context of a single form of implementation (for example, discussed only as a method), the implementation of features discussed may also be implemented in other forms (for example, an apparatus or program). The apparatus may be implemented as appropriate hardware, software, and firmware. The method may be implemented as an apparatus such as, a processor, which refers to a processing device in general, including, for example, a computer, a microprocessor, an integrated circuit, or a programmable logic device. The processor also includes communication devices, such as computers, cell phones, portable/personal digital assistants (PDAs), and other devices that facilitate communication of information between end-users.

According to the present disclosure, by adopting a method of introducing a first measurement unit (e.g., a vision sensor and a length sensor) to measure first physical properties (e.g., a width and a length of an electrode plate before pressing) of the electrode plate before pressing and a second measurement unit to measure second physical properties (e.g., a width and a length of the electrode plate after pressing) of the electrode plate after pressing as in-line equipment in a pressing process, and then determining a change in physical properties of a coating material (i.e., the loading level reduction amount) caused by elongation of the electrode plate in the electrode pressing process based on the first physical properties of the electrode plate before pressing and the second physical properties of the electrode plate after pressing, which are measured by the first and second measurement units, the loading level reduction amount that occurs in the pressing process can be determined more accurately and reliably.

Although the present disclosure has been described with reference to embodiments and drawings illustrating aspects thereof, the present disclosure is not limited thereto. Various suitable modifications and variations can be made by a person skilled in the art to which the present disclosure belongs within the scope of the present disclosure as defined by the following claims and their equivalents.

**Claims**

1. An apparatus for manufacturing a battery, the apparatus comprising:

   a measurement module (100) configured to measure physical properties of an electrode plate (E) in a pressing process in which the electrode plate (E) coated with a coating material (C) is pressed by a pressing roll (PR), and comprising a first measurement unit (110) and a second measurement unit (120) respectively provided at an inlet side where the electrode plate (E) is fed into the pressing roll (PR) and an outlet side where the electrode plate (E) is withdrawn from the pressing roll (PR); and
   a processor (200) configured to receive first physical properties of the electrode plate (E) before pressing and second physical properties of the electrode plate (E) after pressing from the first and second measurement units (110, 120), respectively, and to determine a change in physical properties of the coating material (C) caused by stretching of the electrode plate (E) in the pressing process,
   wherein the change in physical properties of the coating material (C) caused by the stretching of the electrode plate (E) functions as a factor for defining a capacity of the battery to be manufactured.

2. The apparatus of claim 1, wherein the processor (200) is configured to calculate an elongation of the electrode plate (E) based on the first and second physical properties of the electrode plate (E), and to determine the change in physical properties of the coating material (C) from the calculated elongation of the electrode plate (E).

3. The apparatus of claim 1 or 2, wherein the change in physical properties of the coating material (C) is an amount of change in coating amount per unit area of the coating material (C) caused by the stretching of the electrode plate (E) in the pressing process.

4. The apparatus of claim 3, wherein the processor (200) is configured to determine the amount of change in coating amount per unit area of the coating material (C) caused by the stretching of the electrode plate (E) in the pressing process based on the elongation of the electrode plate (C) and the coating amount per unit area of the coating (C) material before pressing.

5. The apparatus of any one of claims 1 to 4, wherein:

   the physical properties of the electrode plate (E) comprise a width and/or a length of the electrode plate (E),
   the first measurement unit (110) comprises a first width sensor (111) and/or a first length sensor (112) respectively configured to measure the width and/or the length of the electrode plate (E) before pressing, and
   the second measurement unit (120) comprises a second width sensor (121) and/or a second length sensor (122) respectively configured to measure the width and/or the length of the electrode plate (E) after pressing.

6. The apparatus of claim 5, wherein:

the first physical properties of the electrode plate (E) comprise a first width and/or a first length of the electrode plate (E) measured through the first width sensor (111) and/or the first length sensor (112), respectively, and the second physical properties of the electrode plate (E) comprise a second width and/or a second length of the electrode plate (E) measured through the second width sensor (121) and the second length sensor (122), respectively.

7. The apparatus of claim 6, wherein the processor (200) is configured to:

calculate an elongation of the electrode plate (E) in a width direction based on the first and second widths; and/or calculate an elongation of the electrode (E) plate in a length direction based on the first and second lengths; and calculate a total elongation of the electrode plate (E) due to pressing of the pressing roll (PR) based on the calculated elongations in the width and/or length directions.

8. The apparatus of claim 7, wherein the processor (200) is configured to calculate the elongation in the width direction using a ratio between the first and second widths, and/or to calculate the elongation in the length direction using a ratio between the first and second lengths.

9. The apparatus of any one of claims 1 to 8, wherein the processor (200) is configured to converge a value of the change in physical properties of the coating material (C) to within an allowable range, which is predefined according to manufacturing specifications of the battery, by compressing a tension of the electrode plate in response to the value of the determined change in physical properties of the coating material (C) deviating from the allowable range.

10. A method of manufacturing a battery, the method comprising:

obtaining, by a processor (200), first physical properties of an electrode plate (E) before pressing through a first measurement unit (110), the first measurement unit (110) being provided at an inlet side where the electrode plate (E) coated with a coating material (C) is fed into a pressing roll (PR) and configured to measure the first physical properties of the electrode plate (E);
obtaining, by the processor (200), second physical properties of the electrode plate (E) after pressing through a second measurement unit (120), the second measurement unit (120) being provided at an outlet side where the electrode plate (E) coated with the coating material (C) is withdrawn from the pressing roll (PR) and configured to measure the second physical properties of the electrode plate (E); and
determining, by the processor (200), a change in physical properties of the coating material (C) caused by stretching of the electrode plate (E) in a pressing process based on the first and second physical properties, wherein the change in physical properties of the coating material (C) caused by the stretching of the electrode plate (E) functions as a factor for defining a capacity of the battery to be manufactured.

11. The method of claim 10, wherein, in the determining of the change in physical properties of the coating material (C), the processor (200) is configured to calculate an elongation of the electrode plate (E) based on the first and second physical properties of the electrode plate (E), and to determine the change in physical properties of the coating material (C) from the calculated elongation of the electrode plate (E).

12. The method of claim 11, wherein the change in physical properties of the coating material (C) is an amount of change in coating amount per unit area of the coating material (C) caused by the stretching of the electrode plate (E) in the pressing process, and
wherein, in the determining of the change in physical properties of the coating material (C), the processor (200) is configured to determine the amount of change in coating amount per unit area of the coating material caused by the stretching of the electrode plate (E) in the pressing process based on the elongation of the electrode plate (E) and the coating amount per unit area of the coating material (C) before pressing.

13. The method of any one of claims 10 to 12, wherein:

the physical properties of the electrode plate (E) comprise a width and/or a length of the electrode plate (E),
the first measurement unit (110) comprises a first width sensor (111) and/or a first length sensor (112) respectively configured to measure the width and/or the length of the electrode plate (E) before pressing,
the second measurement unit (120) comprises a second width sensor (121) and/or a second length sensor (122) respectively configured to measure the width and/or the length of the electrode plate (E) after pressing, the first physical properties of the electrode plate (E) comprise a first width and/or a first length of the electrode plate measured through the first width sensor (111) and/or the first length sensor (112), respectively, and the second physical properties of the electrode plate (E) comprise a second width and/or a second length of the electrode plate (E) measured through the second width sensor (121) and/or the second length sensor (122), respectively.

14. The method of claim 13, wherein, in the determining of the change in physical properties of the coating material (C), the processor (200) is configured to calculate an elongation of the electrode plate (E) in a width direction based on the first and second widths, and/or to calculate an elongation of the electrode plate (E) in a length direction based on the first and second lengths, and to calculate a total elongation of the electrode plate (E) due to pressing of the pressing roll (PR) based on the calculated elongations in the width and/or length directions, and
wherein, in the determining of the change in physical properties of the coating material (C), the processor (200) is configured to calculate the elongation in the width direction using a ratio between the first and second widths, and/or to calculate the elongation in the length direction using a ratio between the first and second lengths.

15. The method of any one of claims 10 to 14, further comprising:

comparing, by the processor (200), a value of the determined change in physical properties of the coating material (C) with an allowable range; and
converging, by the processor (200), the value of the change in physical properties of the coating material (C) to within the allowable range by compressing a tension of the electrode plate (E), in response to the value of the determined change in physical properties of the coating material (C) deviating from the allowable range.

# FIG. 1

# FIG. 2

FIRST MEASUREMENT UNIT
(FIRST WIDTH SENSOR AND
FIRST LENGTH SENSOR)

SECOND MEASUREMENT UNIT
(SECOND WIDTH SENSOR AND
SECOND LENGTH SENSOR)

MEASUREMENT MODULE

PROCESSOR

MEMORY

EP 4 632 824 A1

# FIG. 3

# FIG. 4

ELECTRODE PLATE
FEED DIRECTION

① : ELONGATION IN
    WIDTH DIRECTION

② : ELONGATION IN
    LENGTH DIRECTION

COATED
PORTION    UNCOATED
           PORTION

# FIG. 5

```
                        ( START )
                            │
                            ▼
        ┌─────────────────────────────────────┐
        │   OBTAIN FIRST PHYSICAL             │
        │   PROPERTIES OF ELECTRODE           │
  S100──│   PLATE BEFORE PRESSING (OBTAIN     │
        │   FIRST WIDTH AND FIRST LENGTH OF   │
        │   ELECTRODE PLATE BEFORE PRESSING)  │
        └─────────────────────────────────────┘
                            │
                            ▼
        ┌─────────────────────────────────────┐
        │   OBTAIN SECOND PHYSICAL            │
        │   PROPERTIES OF ELECTRODE PLATE     │
  S200──│   AFTER PRESSING (OBTAIN SECOND     │
        │   WIDTH AND SECOND LENGTH OF        │
        │   ELECTRODE PLATE AFTER PRESSING)   │
        └─────────────────────────────────────┘
                            │
                            ▼
        ┌─────────────────────────────────────┐
        │   DETERMINE CHANGE IN PHYSICAL      │
        │   PROPERTIES OF COATING MATERIAL    │
        │   (AMOUNT OF CHANGE IN COATING      │
  S300──│   AMOUNT PER UNIT AREA OF COATING   │
        │   MATERIAL) CAUSED BY STRETCHING    │
        │   OF ELECTRODE PLATE IN PRESSING    │
        │   PROCESS BASED ON FIRST AND        │
        │   SECOND PHYSICAL PROPERTIES        │
        └─────────────────────────────────────┘
                            │
                            ▼
 S500                  ╱         ╲
   │                 ╱   IS VALUE  ╲
┌──────────────┐  Y ╱  OF CHANGE     ╲
│ MAINTAIN     │◀──│ IN PHYSICAL       │
│ CURRENT      │    ╲ PROPERTIES OF   ╱
│ PRESSING     │     ╲ COATING       ╱
│ PROCESS      │      ╲ MATERIAL    ╱
│ CONDITION    │       ╲ WITHIN    ╱
└──────────────┘        ╲ALLOWABLE╱
        │            S400 ╲RANGE?╱
        │                  ╲    ╱
        │                   │ N
        │                   ▼
        │        ┌─────────────────────────────────────┐
        │        │ CONTROL TENSION OF ELECTRODE PLATE  │
        │        │ TO CONVERGE VALUE OF CHANGE IN      │
        │  S600──│ PHYSICAL PROPERTIES OF COATING      │
        │        │ MATERIAL TO WITHIN ALLOWABLE RANGE  │
        │        └─────────────────────────────────────┘
        │                   │
        └──────────────────►│
                            ▼
                        ( END )
```

# FIG. 6

```
┌─────────┐
│  S200   │
└────┬────┘
     ▼
┌─────────────────────────────────────────────────────┐
│  CALCULATE ELONGATION OF ELECTRODE PLATE IN          │──S310
│  WIDTH DIRECTION BASED ON FIRST AND SECOND WIDTHS    │
└────┬────────────────────────────────────────────────┘
     ▼
┌─────────────────────────────────────────────────────┐
│  CALCULATE ELONGATION OF ELECTRODE PLATE IN LENGTH   │──S320
│  DIRECTION BASED ON FIRST AND SECOND LENGTHS         │
└────┬────────────────────────────────────────────────┘
     ▼
┌─────────────────────────────────────────────────────┐
│  CALCULATE TOTAL ELONGATION OF ELECTRODE PLATE       │──S330
│  BASED ON ELONGATIONS IN WIDTH AND LENGTH DIRECTIONS │
└────┬────────────────────────────────────────────────┘
     ▼
┌─────────────────────────────────────────────────────┐
│  DETERMINE AMOUNT OF CHANGE IN COATING               │
│  AMOUNT PER UNIT AREA OF COATING MATERIAL            │──S340
│  AFTER PRESSING BASED ON TOTAL ELONGATION OF         │
│  ELECTRODE PLATE AND COATING AMOUNT PER UNIT         │
│  AREA OF COATING MATERIAL BEFORE PRESSING            │
└────┬────────────────────────────────────────────────┘
     ▼
┌─────────┐
│  S400   │
└─────────┘
```

Europäisches
Patentamt

European
Patent Office

Office européen
des brevets

# EUROPEAN SEARCH REPORT

**Application Number**

EP 24 19 2109

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 6 674297 B2 (NISSAN MOTOR) 1 April 2020 (2020-04-01) * paragraphs [0018] - [0019], [0021], [0028]; figures 1-10 * | 1-8, 10-14 | INV. H01M4/04 H01M4/139 |
| X | CN 117 181 818 A (EVE ENERGY CO LTD) 8 December 2023 (2023-12-08) * paragraphs [0048] - [0078] * | 1-4, 9-11,15 | |
| A | JP 2014 160048 A (HITACHI POWER SOLUTIONS CO LTD) 4 September 2014 (2014-09-04) * paragraphs [0025] - [0027]; figures 5-6 * | 1-15 | |

**TECHNICAL FIELDS SEARCHED (IPC)**

H01M

The present search report has been drawn up for all claims

| Place of search | Date of completion of the search | Examiner |
|---|---|---|
| Munich | 17 January 2025 | Monti, Adriano |

EPO FORM 1503 03.82 (P04C01)

## ANNEX TO THE EUROPEAN SEARCH REPORT
## ON EUROPEAN PATENT APPLICATION NO.

EP 24 19 2109

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2025

| Patent document cited in search report | | Publication date | Patent family member(s) | | Publication date |
|---|---|---|---|---|---|
| JP 6674297 | B2 | 01-04-2020 | JP | 6674297 B2 | 01-04-2020 |
| | | | JP | 2017173062 A | 28-09-2017 |
| CN 117181818 | A | 08-12-2023 | NONE | | |
| JP 2014160048 | A | 04-09-2014 | CN | 104009201 A | 27-08-2014 |
| | | | JP | 5411371 B1 | 12-02-2014 |
| | | | JP | 2014160048 A | 04-09-2014 |

EPO FORM P0459

For more details about this annex : see Official Journal of the European Patent Office, No. 12/82